# EUROPEAN PATENT APPLICATION

(11) **EP 4 801 053 A1**
(43) Date of publication of application: **02.09.2026**
(21) Application number: 24881834.6
(22) Date of filing: 24.10.2024
(51) Int. Cl.: H04N 23/70

(54) **ASYNCHRONOUS PIXEL MATRIX FOR AN IMAGE WITH AUTOMATIC EXPOSURE (AE) AND HIGH DYNAMIC RANGE (HDR) IN A SINGLE CAPTURE**

(30) Priority: 26.10.2023 ES 202330881
(71) Applicant: Consejo Superior de Investigaciones Científicas (CSIC), 28006 Madrid (ES); Universidad de Sevilla, 41013 Sevilla (ES)
(72) Inventor: LAMOUARAA SEDLACKOVA, Yassine, 41092 Sevilla Sevilla (ES); CARMONA GALÁN, Ricardo, 41092 Sevilla Sevilla (ES); FERNÁNDEZ BERNI, Jorge, 41013 Sevilla Sevilla (ES)
(74) Representative: Isern Patentes y Marcas S.L.
(86) International application number: PCT/ES2024/070652
(87) International publication number: WO 2025/088237

(57) **Abstract**

A system and method for single-shot concurrent auto-exposure (AE) and high-dynamic-range (HDR) imaging that simultaneously realizes AE and HDR during the capture of an image; and wherein for each photo-integration period established to produce the image, a pixel array circuitry automatically adjusts its response to an average illumination at the moment and fits a radiance map of the scene within an available pixel signal range.

## Description

### OBJECT OF THE INVENTION

The object of the present invention is an asynchronous pixel array for single-shot concurrent auto-exposure (AE) and high-dynamic-range (HDR) imaging based on a sensing strategy that simultaneously performs AE and HDR during the image capture.

### BACKGROUND OF THE INVENTION

Ideally, the image sensors are expected to provide a faithful scene representation regardless of the lighting conditions at the capture moment. Among the various reasons why this is remarkably challenging, two are particularly relevant to the present invention: (1) the sensor must adapt its response to the corresponding ambient illumination, which is unknown a priori; and (2) the sensor must deal with the dynamic range of real-world scenes, which can be extremely high and is also unknown in advance.

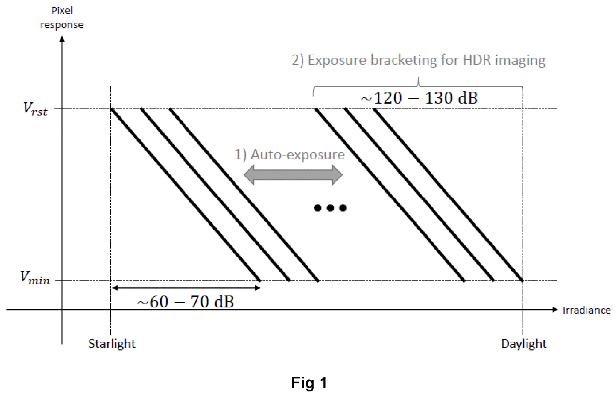

Figure 1 illustrates how these points (1) and (2) are usually addressed in standard CMOS image sensors. First, the sensor response which is approximately linear and typically spans 60 - 70 dB, is shifted to the suitable interval according to prescribed aspect of the scene (e.g., in the simplest case, the average illumination). To this end, auto-exposure (AE) techniques are commonly used. Second, if the scene to be represented requires a greater dynamic range than that of the sensor- e.g., an exterior window in an otherwise poorly lit room -, so-called *exposure bracketing* is applied: several images are captured with different exposure times and then combined to produce a high-dynamic-range (HDR) image.

These previously mentioned approaches perform well for static scenes. However, in scenes featuring abrupt lighting changes or motion, AE algorithms may not timely converge, setting unsuitable exposure parameters and/or producing flickering - oscillations in image brightness-, and exposure bracketing give rise to motion artifacts. Furthermore, both approaches prolong the image formation process while searching for the optimal exposure setting and rendering the HDR image. This may lead to missing critical information about the scene when sudden variations occur, for example, in surveillance-based security applications or vision-enabled robot navigation.

AE refers to the automatic adjustment of exposure parameters -usually its durationto produce an optimal image. There is no exact definition of "optimal" in this context. This why users are allowed to guide AE algorithms according to personal aesthetic criteria in most current commercial devices that embed imaging, e.g., mobile phones. These algorithms use a variety of metrics and statistical tools, such as brightness histogram, image gradient, image entropy, or object detection performance, to determine a suitable exposure time through an iterative process typically based on a feedback loop. This loop requires some time to converge, which may be critical in scenarios where decisions must be made as fast as possible, e.g., drone navigation or autonomous cars. In addition, constant changes in a dynamic scene may further delay convergence, or even make it impossible, thereby exacerbating the problem.

Properly centering the sensor response through AE techniques is not enough in scenarios featuring a range of illuminations that extends well beyond the dynamic range of the sensor. In such scenarios, the most usual approach to avoid underexposed or overexposed regions in the resulting image is the aforementioned exposure bracketing. The main advantage of this approach is that it exploits the linear response of standard CMOS imagers; it is therefore an inexpensive solution that does not require extra hardware in the sensor.

However, several consecutive captures are needed to cover the scene illumination range. These captures must be subsequently merged to produce the HDR representation. The long process required to complete this image fusion incurs high computational load and memory consumption and leads to poor encoding of dynamic scenes. To mitigate these issues, specific pixel realizations for HDR have been proposed. In general, these realizations require specific AE techniques to establish suitable exposure settings, although there are exceptions. For instance, sensors based on self-reset and saturation count accumulate information during the photo-integration interval to subsequently reconstruct the corresponding HDR image regardless of the illumination conditions; their fundamental limitations in terms of dynamic range are noise, the counter resolution, and the frame rate required by the targeted application. HDR sensors based on logarithmic-response pixels constitute another approach that does not require AE. In this case, there is no integration period because continuous conversion of light intensity is implemented. The performance of this approach is further improved by logarithmic photovoltaic pixels.

On the contrary, the present invention discloses a method that merges AE and HDR imaging during image capture to overcome some of the limitations of previous methods. In contrast to exposure bracketing, a single shot is required by the proposed method to promptly provide a scene representation ready for further analysis. With respect to self-reset sensors, no circuitry to count the number of saturations and render the corresponding image is needed in our case - the operation principle is completely different - but it has been kept the fundamental advantage of linear pixel response. Finally, although logarithmic sensors can theoretically encode any radiance map, there is no inherent adaptation to the illumination conditions at the capture moment. This may lead to poor use of the available signal range and consequent generation of a noisy image; an extra stage of tone mapping could even be required to enable visual processing. By contrast, the implicit adaptation to the average illumination in the proposed approach automatically centers the sensor response; it is around this reference illumination that HDR imaging is accomplished.

### SUMMARY OF THE INVENTION

The present invention is based on a sensing strategy that simultaneously performs AE and HDR during the image capture process. For each photo-integration period established to produce an image, the pixel array circuitry automatically adjusts its response to the average illumination at the moment and fits the radiance map of the scene within the available pixel signal range. The sensor response is linear for low levels of light intensity, wherein the terms "low" and "high" are relative to the global illumination conditions, given the concurrent AE operation. No extra time apart from the photo-integration interval is needed, thereby notably reducing the possibility of missing information and generating motion artifacts. Furthermore, the HDR image is immediately ready after photo-integration for processing and quick decision-making. In addition, any radiance map can be accommodated by the present invention. This means that the fundamental limitation to achieve a faithful scene representation is noise, regardless of the lighting conditions. The proposed circuitry operates asynchronously once the pixels are reset, requiring no external control. All these characteristics are accomplished while keeping an intrinsically linear photo-transduction, even though a non-linear sensor response is implemented as a whole.

The object of the invention is fulfilled with the method and sensor of appendant claims. Throughout the description and claims the word "comprises" and its variants are not intended to exclude other technical characteristics, additives, components, or steps. For those skilled in the art, other objects, advantages, and features of the invention will emerge partly from the description and partly from the practice of the invention. The following examples and drawings are provided by way of illustration and are not intended to restrict the present invention. Furthermore, the present invention covers all possible combinations of particular and preferred embodiments indicated herein.

### BRIEF DESCRIPTION OF THE DRAWINGS

To complement the description that is being made and in order to help a better understanding of the characteristics of the invention, in accordance with a preferred example of its practical implementation, a set of drawings is attached as an integral part of said description. where, for illustrative and non-limiting purposes, the following has been represented:
- Figure: 1 shows the dynamic range of standard CMOS image sensors approximately spans 60-70 dB This range is properly exploited through AE techniques, which iterate to adapt the sensor response to prescribed aspects of the ambient illumination. If the sensor dynamic range is not enough for rendering a suitable scene representation, several captures are taken with different exposure times - exposure bracketing - and then combined to output an HDR image.

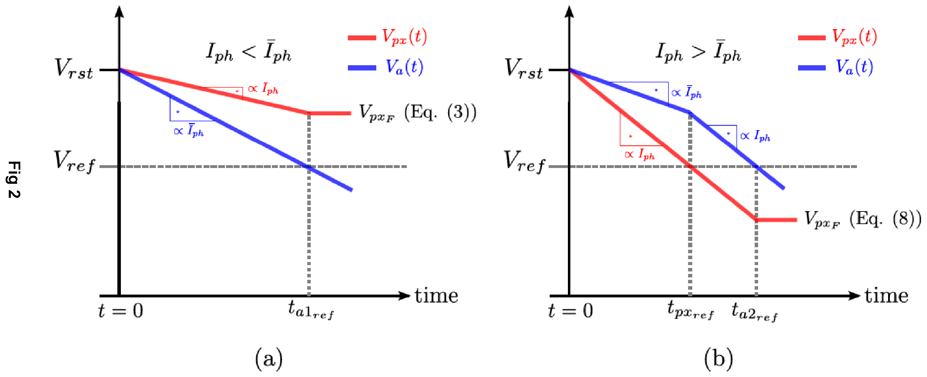

- Figure 2: shows the representation of two linear photo-integration processes taking place concurrently at a pixel. One of these processes is encoded by *Vₚₓ*(*t*), which evolves according to the pixel illumination (*Iₚₕ*) until the time instant at which the second process, encoded by *Vₐ*(*t*), crosses a reference voltage denoted by *V_{ref},* thereby establishing the final pixel voltage *V_{px_{F}}.* Note that *Vₐ*(*t*) initially evolves according to the average illumination impinging on the pixels composing the image sensing array (*I̅ₚₕ*). The two possible practical cases are depicted: (a) *Iₚₕ < I̅ₚₕ,* which means that *Vₐ*(*t*) crosses *V_{ref}* first; and (b) *Iₚₕ* > *I̅ₚₕ,* which means that *Vₚₓ*(*t*), crosses *V_{ref}* first, setting *Vₐ*(*t*) to evolve according to the pixel illumination from that instant (*t_{px_{ref}}*) on.

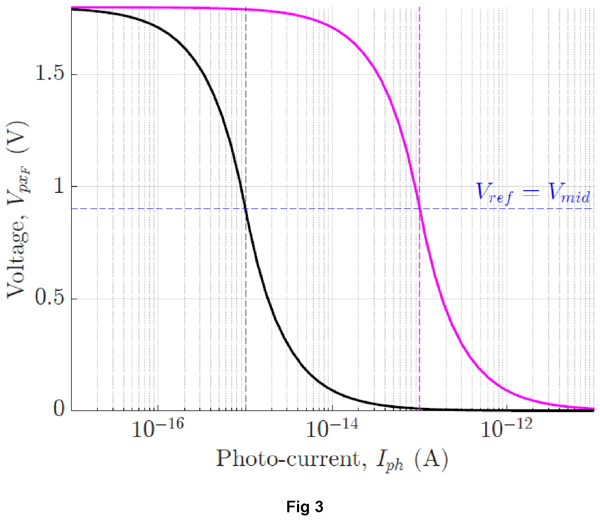

- Figure 3: shows two examples of pixel output, jointly described by equations (3) and (8), represented in semilogarithmic scale. The left trace corresponds to an average photocurrent of *I̅ₚₕ* = 1 *fA* whereas the right trace corresponds to an average photo-current of *I̅ₚₕ* = 100 *fA*. For both traces, it has been set *Vₘₐₓ* = *Vᵣₛₜ = 1.8 V, Vₘᵢₙ* = 0 *V*, and *V_{ref}* = 0.9*V.*

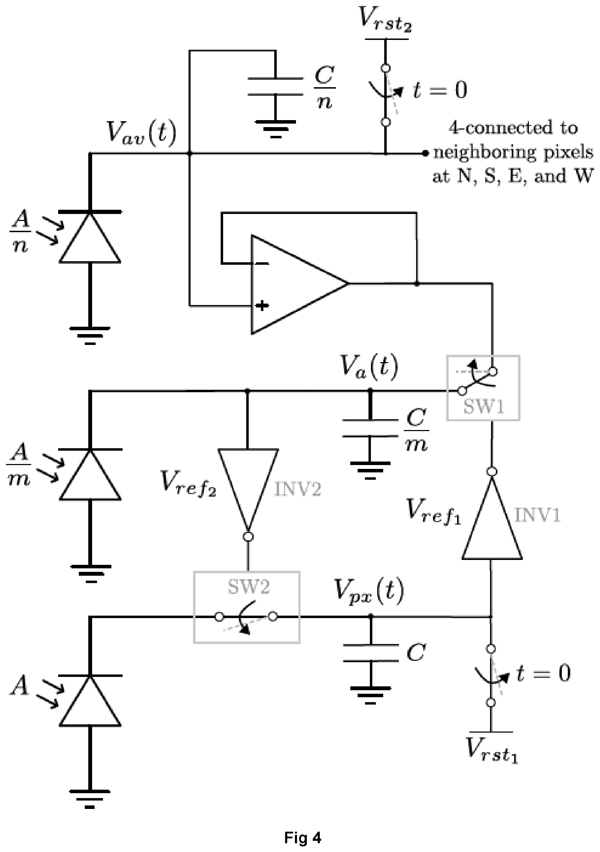

- Figure 4: shows the proposed circuitry for the implementation of the basic pixel operation according with the present invention. The coupling of the two photo-integration processes encoded by *Vₚₓ*(*t*) and *Vₐ*(*t*) is implemented through switches SW1 and SW2 and inverters INV1 and INV2. The voltage *Vₐᵥ*(*t*) is introduced to keep a faithful representation of the average illumination, copied into *Vₐ*(*t*) during the required interval.

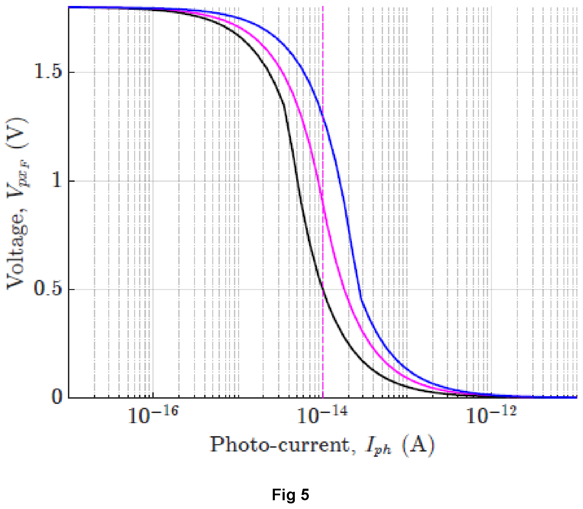

- Figure 5: shows examples of the pixel output described by equation (11) below, represented in semilogarithmic scale. The three traces were obtained for the same average photocurrent, *I̅ₚₕ =* 10 *fA*, and same reset voltages, *V*_{*rst*1} *= V*_{*rst*2} = 1.8 *V.* The central trace was obtained for *V*_{*ref*₁} = *V*_{*ref*₂} = 0.9 *V*; the left trace was obtained for *V*_{*ref*₁} *=* 1.3 *V* and *V*_{*ref*₂} *=* 0.5 *V*; the trace in the right was obtained for *V*_{*ref*₁} *=* 0.8 *V* and *V*_{*ref*₂} *=* 1.3 *V.*

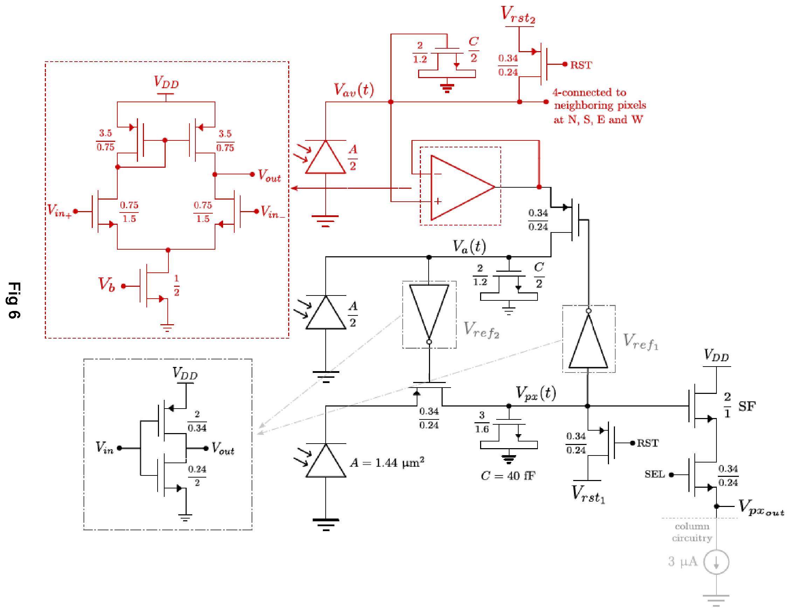

- Figure 6: shows the transistor-level design of the pixel realization proposed in figure 4. The elements in red can be shared among several pixels to save area and power consumption. *V*_{*rst*₁}, *V*_{*rst*₂}, *V*_{*ref*₁}*,* and *V*_{*ref*₂} are critical design variables; they must be properly set to maximize the range of *V_{px_{F}}* according to equation (11) while ensuring the correct operation of the different circuit blocks, including the readout through the source follower (SF).

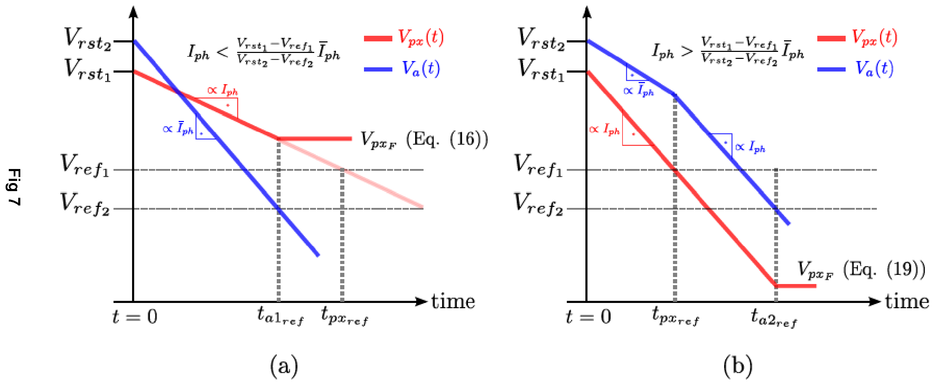

- Figure 7: shows examples of the two possible dynamics for the electrical pixel realization proposed in figure 4: (a) temporal evolution of *Vₚₓ*(*t*) and *Vₐ*(*t*) leading to a final pixel voltage described by equation (16); and (b) temporal evolution of *Vₚₓ*(*t*)and *Vₐ*(*t*)leading to a final pixel voltage described by equation (19).

### PREFERRED EMBODIMENTS OF THE INVENTION

The present invention discloses an imaging method that integrates AE and HDR asynchronously in a single shot keeping a linear pixel response and a sensor design that implements the method.

### Basic model

In the basic model, it will be considered the figure 2, which shows two linear photo-integration processes taking place concurrently during the image formation: (1) *Vₚₓ*(*t*) represents the evolution of the pixel voltage itself, which decreases linearly from the reset voltage *Vᵣₛₜ* according to the local photo-generated current *Iₚₕ*; and (2) *Vₐ*(*t*) represents the evolution of an auxiliary voltage that initially decreases linearly from the reset voltage according to the average photo-generated current over the whole pixel array, denoted as *I̅ₚₕ.* Detail on how this global photo-current is sensed will be explained below, with reference to figures 4 or 6. Therefore, *Vₚₓ*(*t*) and *Vₐ*(*t*) initially evolve as follows, $\begin{matrix}{V}_{px} \left(t\right) = {V}_{rst} - \frac{{I}_{ph}}{C} \\ {V}_{a} \left(t\right) = {V}_{rst} - \frac{{\overline{I}}_{ph}}{C}\end{matrix}$ where C is the photo-integration capacitance, which is the same (in this basic model) for both photo-integration processes, without loss of generality. The photo-integration processes are coupled through a reference voltage *V_{ref},* again common to both processes, without loss of generality. Whenever *Vₐ*(*t*) crosses *V_{ref},* the process encoded by *Vₚₓ*(*t*) stops and the final pixel value is established at *V_{px_{F}}.* If *Vₚₓ*(*t*)crosses *V_{ref}* before *Vₐ*(*t*), the evolution of *Vₐ*(*t*) changes, decreasing linearly from that crossing point on according to the local photo-generated current.

This coupling can be modeled by considering the two possible scenarios represented in the figure 2. The simplest scenario is depicted in Fig. 2(a): given that *Iₚₕ < I̅ₚₕ, Vₐ*(*t*) crosses *V_{ref}* first. Let us denote this time instant as *t*_{*a*1}*_{ref},* which can be easily derived from Eq. (1) by setting *Vₐ*(*t*) *= V_{ref}* and solving for *t,* ${t}_{a {1}_{ref}} = \frac{C \left({V}_{rst}-{V}_{ref}\right)}{{\overline{I}}_{ph}}$ and substituting this time instant into the expression for *Vₚₓ*(*t*) in Eq. 1, it is obtained the following final pixel value. ${V}_{{px}_{F}} = {V}_{rst} - \left({V}_{rst}-{V}_{ref}\right) \frac{{I}_{ph}}{{\overline{I}}_{ph}} , ∀ {I}_{ph} < {\overline{I}}_{ph}$

Therefore, according to Eq. (3), pixels presenting a local illumination below the average illumination will have a final value proportional to that local illumination, but always in relative terms with the average illumination. This is a crucial point to realize AE. Differentiating in equation (3), it is obtained *dV_{px_{F}}*/*dIₚₕ* = (*Vᵣₛₜ - V_{ref}*)/*I̅ₚₕ ,* ∀*Iₚₕ < I̅ₚₕ* i.e., the rate of change of *V_{px_{F}}*with respect to the local illumination is constant. This means that the scene information is transferred to the image plane in the same linear manner for all tones below the average illumination. Note also that if *V_{ref}* is fixed at the midpoint of the signal range - let us denote this midpoint as *V_{mid}* -, setting *Iₚₕ = I̅ₚₕ* in equation (3) leads to *Vₚₓ*(*t*_{*a*1}*_{_{ref}} )* = *V_{mid}*; that is, when the local and average illuminations coincide, the final pixel value falls at the center of the pixel response, regardless of the particular absolute values of such illuminations.

The second scenario illustrated in figure 2(b) will now be analyzed. In this case, given that *Iₚₕ > I̅ₚₕ, Vₚₓ*(*t*) crosses *V_{ref}* first. Let us denote this time instant as *t_{px_{ref}},* which can be easily derived from Eq. (1) by setting *Vₚₓ*(*t*) *= V_{ref}* and solving for *t,* ${t}_{{px}_{ref}} = \frac{C \left({V}_{rst}-{V}_{ref}\right)}{{I}_{ph}}$ and substituting this time instant into the expression for *Vₐ*(*t*) in Eq. (1), it has been obtained the following value, ${V}_{a} \left({t}_{{px}_{ref}}\right) = {V}_{rst} - \left({V}_{rst}-{V}_{ref}\right) \frac{{\overline{I}}_{ph}}{{I}_{ph}}$

As mentioned above, from *t_{px_{ref}}* on, *Vₐ*(*t*) decreases linearly according to the local photo-generated current, ${V}_{a} \left(t\right) = {V}_{rst} - \left({V}_{rst}-{V}_{ref}\right) \frac{{\overline{I}}_{ph}}{{I}_{ph}} - \frac{{I}_{ph}}{C} \left(t-{t}_{{px}_{ref}}\right) , ∀ t > {t}_{{px}_{ref}}$

Setting *Vₐ*(*t*) *= V_{ref}* in Eq. (6) and solving for *t,* it has been obtained *t*_{*a*2}*_{ref},* i.e., the time instant at which *Vₐ*(*t*) crosses *V_{ref}* in this second scenario, ${t}_{a {2}_{ref}} = {t}_{{px}_{ref}} + \frac{C \left({V}_{rst}-{V}_{ref}\right) \left(1-\frac{{\overline{I}}_{ph}}{{I}_{ph}}\right)}{{I}_{ph}}$

Finally, substituting *t*_{*a*2*_{ref}*} into the expression for *Vpx(t)* in Eq. (1), it has been obtained the final pixel value when *Iₚₕ > I̅ₚₕ,* ${V}_{{px}_{F}} = {V}_{ref} - \left({V}_{rst}-{V}_{ref}\right) \left(1-\frac{{\overline{I}}_{ph}}{{I}_{ph}}\right) , ∀ {I}_{ph} > {\overline{I}}_{ph}$

Therefore, according to equation (8), pixels presenting a local illumination above the average illumination will have a final value inversely proportional to that local illumination, again in relative terms with the average illumination. In this case, ${dV}_{{px}_{F}} / {dI}_{ph} = - \left({V}_{rst}-{V}_{ref}\right) {\overline{I}}_{ph} / {I}_{ph}^{2}$ *,* ∀*Iₚₕ > I̅ₚₕ,* i.e., the rate of change of *V_{px_{F}}* with respect to the local illumination decreases in a quadratic manner with the local illumination. This means that illumination values above the average illumination will be progressively compressed into the available signal range until no scene information is transferred to the image plane because of noise or resolution of the readout circuitry. Note that for very high pixel illuminations - with respect to the average illumination, that is, *Iₚₕ* » *I̅ₚₕ* -, *I̅ₚₕ*/*Iₚₕ* ≃ 0. In this case, it has been obtained the following expression from equation (8), ${V}_{{px}_{F}} ≃ 2 {V}_{ref} - {V}_{rst} , ∀ {I}_{ph} ≫ {\overline{I}}_{ph}$

Let us assume again that *V_{ref}* is set at the midpoint of the signal range, which can be expressed as *V_{mid}* = (*Vₘₐₓ* + *Vₘᵢₙ*)/2. Clearly, in our case *Vₘₐₓ* = *Vᵣₛₜ.* Thus, substituting *V_{ref} =* (*Vᵣₛₜ* + *Vₘᵢₙ*)/2 into Eq. 9, it has been obtained, ${V}_{{px}_{F}} ≃ {V}_{min} , ∀ {I}_{ph} ≫ {\overline{I}}_{ph}$

All in all, it has been concluded that, if *V_{ref} = V_{mid}* = (*Vₘₐₓ* + *Vₘᵢₙ*)/2 *and Vₘₐₓ* = *Vᵣₛₜ,* the proposed sensing scheme produces a pixel voltage equal to:
- *Vₘᵢₙ* for *Iₚₕ » I̅ₚₕ*;
- *V_{mid}* for *Iₚₕ* = *I̅ₚₕ* note that equations (3) and (8) converge into *V_{px_{F}} = V_{ref}* at *Iₚₕ = I̅ₚₕ*;
- *Vₘₐₓ* for *Iₚₕ* « *I̅ₚₕ.*

Remarkably, this ideal accommodation of photo-currents into the available signal range expressed by equations (3) and (8) -linear for low illuminations, compressive for high illuminations- occurs regardless of particular absolute magnitudes of the photo-currents, given the dependence of *V_{px_{F}}* on either *Iₚₕ*/*I̅ₚₕ* or *I̅ₚₕ*/*Iₚₕ.* Another point to emphasize is that *Vₚₓ*(*t*) always evolves linearly until the final pixel voltage is established, even though *V_{px_{F}}* presents a non-linear relation with *Iₚₕ* for *I̅ₚₕ > Iₚₕ.* Therefore, the proposed coupling between photo-integration processes enables an inherently linear pixel sensing resulting in a global non-linear sensor response.

Figure 3 presents two examples of pixel output (*V_{px_{F}}*) for a sweep of six orders of magnitude in *Iₚₕ* assuming *I̅ₚₕ =* 1 *fA* (left trace) and *I̅ₚₕ =* 100 *fA* (right trace). For both traces, it has been set *Vₘₐₓ* = *Vᵣₛₜ* = 1.8 *V, Vₘᵢₙ* = 0 *V,* and *V_{ref}* = *0.9 V.* Thus, the average photocurrent becomes represented by *V_{mid}* in both cases. Note that the proposed sensing strategy accommodate photo-currents spanning a very wide interval around the average illumination within the available signal range.

### Electrical implementation

As it is abovementioned, the previous disclosure is related to the basic model of a pixel according with the present invention. Figure 4 shows pixel circuitry that implements the basic model presented in the previous paragraphs, with some addition attributes as will be explained below.

The voltage *Vₐᵥ*(*t*), which evolves linearly from *V*_{*rst*₂} according to the average illumination once the reset period is finished at t = 0 -this is the starting point of global-shutter photo-integration leading to image formation. This sensing of the average illumination is achieved by the interconnection of the node associated to *Vₐᵥ*(*t*) at every pixel with the corresponding nodes of the neighboring pixels at north, south, east, and west throughout the 2D array. This gives rise to a lattice in which all the pixels become interconnected, and the photo-currents generated at the photo-diodes with area *A*/*n* are concurrently averaged through charge redistribution at the capacitors with capacitance equal to *C*/*n.* Note that the operational amplifier in buffer configuration copies *Vₐᵥ*(*t*)into *Vₐ*(*t*) until *Vₚₓ*(*t*) crosses the threshold voltage of INV1, denoted as *V*_{*ref*1}*.* At this time instant, switch SW1, which is controlled by the output of inverter INV1, disconnects the output of the operational amplifier from *Vₐ*(*t*), which continues evolving from that instant on according to the local photo-current generated by the photo-diode with area *A*/*m*.

Likewise, when *Vₐ*(*t*) crosses the threshold voltage of INV2, denoted as *V*_{*ref*₂}*,* switch SW2 disconnects the photodiode with area *A* from its sensing capacitor, setting the final pixel voltage. The fact that it has been considered two different reset voltages - *V*_{*rst*₁} and *V*_{*rst*₂}- and two different reference voltages -*V*_{*ref*₁} and *V*_{*ref*₂}*-* make the derivation of *V_{px_{F}}* slightly more involved than in the basic model previously disclosed. In the section "analytical model of pixel realization" it is demonstrated that *V_{px_{F}}* for the circuit proposed in figure 4 is expressed as follows, $\begin{matrix}{V}_{{px}_{F}} = {V}_{{rst}_{1}} - \left({V}_{{rst}_{2}}-{V}_{{ref}_{2}}\right) \left(\frac{{I}_{ph}}{{\overline{I}}_{ph}}\right) , ∀ {I}_{ph} < \frac{{V}_{{rst}_{1}} - {V}_{{ref}_{1}}}{{V}_{{rst}_{2}} - {V}_{{ref}_{2}}} {\overline{I}}_{ph} \\ {V}_{{px}_{F}} = {V}_{{ref}_{1}} + {V}_{{ref}_{2}} - {V}_{{rst}_{2}} + \left({V}_{{rst}_{1}}-{V}_{{ref}_{1}}\right) \frac{{\overline{I}}_{ph}}{{I}_{ph}} \\ ∀ {I}_{ph} > \frac{{V}_{{rst}_{1}} - {V}_{{ref}_{1}}}{{V}_{{rst}_{2}} - {V}_{{ref}_{2}}} {\overline{I}}_{ph}\end{matrix}$

Note that the expressions in Eq. (11) converge into equations (3) and (8), respectively, if *V*_{*rst*₁} = *V*_{*rst*₂} = *Vᵣₛₜ* and *V*_{*ref*₁} *= V*_{*ref*₂} *= V_{ref}.* The availability of *V*_{*rst*₁}, *V*_{*rst*₂}, *V*_{*ref*₁} and *V*_{*ref*₂} as design parameters endows the pixel realization with flexibility when it comes to shaping the sensor response. Figure 5 shows three traces of the pixel output described by equation (11) for *I̅ₚₕ =* 10 *fA, V*_{*rst*₁} *= V*_{*rst*₂} = 1.8 *V,* and different values of *V*_{*ref*₁} and *V*_{*ref*₂}*.* Interestingly, changes in these reference voltages imply a significant variation in how the photo-currents close to the average illumination are mapped into the available signal range.

As a final comment, parameters m and *n* in figure 4 are assumed to be greater than unity and reflect the fact that, because the photo-integration processes associated to *Vₐ*(*t*) and *Vₐᵥ*(*t*) are auxiliary in the generation of the final pixel value, the areas of the corresponding photo-diodes and sensing capacitors may be proportionally reduced for the sake of increasing the fill factor and reducing the pixel pitch, which are two fundamental parameters of image sensors.

In natural vision systems, the retina is the front-end specialized tissue that senses light and performs early tasks before delivering an electrical message through the optic nerve to the brain for further processing and visual perception. Automatic light adaptation is one of such early tasks. The proposed circuitry does not implement any of the extremely complex signal pathways identified in the retina, there are general features that do coincide. First, in the retina, as in our approach, adaptation is relative to the mean level of illumination and is based on proper adjustment of the photo-receptors' temporal response. The range of this response is narrow in both cases and cannot directly accommodate the large swing of illuminations in real-world scenarios. In the retina, the mean illumination is estimated by the horizontal cells (HCs) by averaging the activity of the cones through strong electrical coupling. HCs, which constitute the closest lattice of cells that interact with the cones, also provide the photo-receptors with highly "personalized" feedback for modulation of their response.

In the proposed circuitry, the mean illumination is obtained by averaging the local photoresponse throughout the pixel array using charge redistribution, i.e., strong electrical coupling. Moreover, similar to the HCs, the same circuit elements that sense the mean illumination provide feedback to the pixel photo-integration process to properly modulate the output according to the ambient lighting conditions.

### Pixel design

Figure 6 shows a transistor-level design of the pixel realization proposed in the figure 4. It has been carried out in a standard 0.18µm 3.3V CMOS technology. The elements marked in red can be shared among several pixels to save area and power consumption, as will be described later on. For now, it has been assumed that each pixel includes the circuitry depicted in figure 6.

According to equation (11), *V_{px_{F}}* ranges from a maximum of *V*_{*rst*1} for *Iₚₕ* « *I̅ₚₕ* to a minimum of (*V*_{*ref*₁} *+ V*_{*ref*₂} *- V*_{*rst*₂}) for *Iₚₕ* » *I̅ₚₕ.* To extend the pixel signal range as much as possible at the upper limit, it is clear that *V*_{*rst*₁} must be set to *VDD* = 3.3*V.* Concerning the minimum of *V_{px_{F}},* it must be established to a value such that the readout through the source follower (SF) can be properly performed. Thus, it has been designed the inverters for the threshold voltages to be *V*_{*ref*₁} *= V*_{*ref*₂} *=* 2.15 *V,* thereby allowing for *V*_{*rst*₂} to be set to *VDD* = 3.3 *V* as well such that the minimum value of *V_{px_{F}}* is nominally equal to 1 V, high enough for the source follower to provide a suitable *V_{pxₒᵤₜ}* . For this setting of *V*_{*rst*₁}, *V*_{*rst*₂}, *V*_{*ref*₁} and *V*_{*ref*₂}*,* the transition between the two response curves in equation (11) occurs at *Iₚₕ = I̅ₚₕ*; at this point, *V_{px_{F}} = V_{mid}* = 2.15 *V.*

The photo-diodes were simulated using a Verilog-AMS model. In this model, the incident optical power is set as a parameter to electrically simulate the sensor response to HDR scenes at different ambient illuminations, as will be described in the "analytical model of pixel realization" section. Note that *m* = *n* = 2 in the pixel design shown in figure 6. This downscaling of the auxiliary photo-diodes and corresponding sensing capacitors could be more aggressive. However, it has been decided to be conservative in this regard to ensure the targeted functionality. As a final comment, the NMOS-based realization of the capacitors aims to save pixel area at the cost of introducing greater non-linearities with respect to other solutions, e.g., MIM capacitors.

### Analytical model of pixel realization

For the pixel realization shown in Fig. 4, t = 0 establishes the end of the reset interval and beginning of the image formation process, which realizes global shutter for proper sensing of the ambient illumination. After reset, *Vₚₓ*(*t*) is set to *V*_{*rst*₁} and *Vₐᵥ*(*t*) to *V*_{*rst*₂} *.* These voltages must be greater than *V*_{*ref*₁} and *V*_{*ref*₂}, respectively. Thus, the output of inverters INV1 and INV2 will be set to logic "0" at t = 0; switches SW1 and SW2 must be designed to be ON for this input control signal, thereby establishing an electrical connection between the corresponding circuit nodes. For SW1, this means that *Vₐᵥ*(*t*) is initially buffered into *Vₐ*(*t*); for SW2, it means that the sensing capacitance C is initially connected to the photodiode of area *A*. Given that, as mentioned in the electrical realization section, *Vₐᵥ*(*t*) represents the average illumination impinging on the 2D pixel array, *Vₚₓ*(*t*) and *Vₐ*(*t*) initially evolve as follows, $\begin{matrix}{V}_{px} \left(t\right) = {V}_{{rst}_{1}} - \frac{{I}_{ph}}{C} t \\ {V}_{a} \left(t\right) = {V}_{{rst}_{2}} - \frac{{\overline{I}}_{ph}}{C} t\end{matrix}$

The expressions in equation (12) will change when either *Vₚₓ*(*t*) crosses *V*_{*ref*₁} or *Vₐ*(*t*) crosses *V*_{*ref*₂}*,* thereby setting SW1 or SW2 to OFF, respectively. It has been assumed, as a first case, that *Vₐ*(*t*) crosses *V*_{*ref*₂} first at a time instant that, for analogy with the derivations in the basic model, is denoted as *t*_{*a*1}*_{ref}.* This time instant can be easily obtained from equation (12) by setting *Vₐ*(*t*) *= V*_{*ref*₂} and solving for *t,* ${t}_{a {1}_{ref}} = \frac{C \left({V}_{{rst}_{2}}-{V}_{{ref}_{2}}\right)}{{\overline{I}}_{ph}}$

At *t = t*_{*a*1}*_{ref},* the output of INV2 changes to logic "1" and SW2 becomes OFF, establishing the final pixel value *V_{px_{F}}* at the sensing capacitance C. Before substituting equation (13) into the expression for *Vₚₓ*(*t*) in equation (12), it must be analyzed the condition that leads to *Vₐ*(*t*) crossing *V*_{*ref*₂} before *Vₚₓ*(*t*) crosses *V*_{*ref*₁}*.* According to equation (12), *Vₚₓ*(*t*) would cross *V*_{*ref*₁} at a time instant *t_{px_{ref}}* -using again the notation in the basic model- expressed as follows, ${t}_{{px}_{ref}} = \frac{C \left({V}_{{rst}_{1}}-{V}_{{ref}_{1}}\right)}{{I}_{ph}}$

Therefore, the condition for this first case to occur is that *t*_{*a*1}*_{_{ref}} < t_{px_{ref}},* which after some algebra yields, ${I}_{ph} < \frac{{V}_{{rst}_{1}} - {V}_{{ref}_{1}}}{{V}_{{rst}_{2}} - {V}_{{ref}_{2}}} {\overline{I}}_{ph}$

Finally, substituting equation (13) into the expression for *Vₚₓ*(*t*) in equation (12), it has been obtained, ${V}_{{px}_{F}} = {V}_{{rst}_{1}} - \left({V}_{{rst}_{2}}-{V}_{{ref}_{2}}\right) \left(\frac{{I}_{ph}}{{\overline{I}}_{ph}}\right) , ∀ {I}_{ph} < \frac{{V}_{{rst}_{1}} - {V}_{{ref}_{1}}}{{V}_{{rst}_{2}} - {V}_{{ref}_{2}}} {\overline{I}}_{ph}$

An example of this first dynamics is depicted in figure 7(a). Note that not only the relative positions of *V*_{*rst*₁} and *V*_{*rst*₂} are relevant in these dynamics, but also those of *V*_{*ref*₁} and *V*_{*ref*₂}*,* as well as the difference between the local photo-current *Iₚₕ* and average illumination encoded by *I̅ₚₕ.* The second possible case takes place when *t*_{*a*1}*_{_{ref}} > t_{px_{ref}}.* In this case, *Vₚₓ*(*t*) crossing *V*_{*ref*₁} occurs first. Thus, at *t = t_{px_{ref}},* the output of INV1 changes to logic "1" and SW1 becomes OFF. Consequently, from *t = t_{px_{ref}} on, Vₐ*(*t*) evolves according to *Iₚₕ* as follows, ${V}_{a} \left(t\right) = {V}_{{rst}_{2}} - \frac{{\overline{I}}_{ph}}{C} {t}_{{px}_{ref}} - \frac{{I}_{ph}}{C} \left(t-{t}_{{px}_{ref}}\right) , ∀ t \geq {t}_{{px}_{ref}}$

Eventually, *Vₐ*(*t*) following the dynamics described by equation (17) will cross *V*_{*ref*₂}*,* establishing the final pixel value in this second case. Thus, setting *Vₐ*(*t*) *= V*_{*ref*₂} in equation (17) and solving for *t* yields, ${t}_{a {2}_{ref}} = {t}_{{px}_{ref}} + \frac{C}{{I}_{ph}} \left({V}_{{rst}_{2}}-{V}_{{ref}_{2}}\right) - \frac{C}{{I}_{ph}} \left({V}_{{rst}_{1}}-{V}_{{ref}_{1}}\right) \frac{{\overline{I}}_{ph}}{{I}_{ph}}$

Finally, substituting *t = t*_{*a*2*_{ref}*} into the expression for *Vₚₓ*(*t*) in equation (12), it has been obtained, $\begin{matrix}{V}_{{px}_{F}} = {V}_{{ref}_{1}} + {V}_{{ref}_{2}} - {V}_{{rst}_{2}} + \left({V}_{{rst}_{1}}-{V}_{{ref}_{1}}\right) \frac{{\overline{I}}_{ph}}{{I}_{ph}} \\ ∀ {I}_{ph} > \frac{{V}_{{rst}_{1}} - {V}_{{ref}_{1}}}{{V}_{{rst}_{2}} - {V}_{{ref}_{2}}} {\overline{I}}_{ph}\end{matrix}$

An example of this second dynamics is shown in Fig. 7(b). Note that in both possible dynamics, *Vₚₓ*(*t*) evolves linearly until the final pixel value is established. Finally, also note that equations (16) and (19) converge into *V_{px_{F}} = V*_{*ref*₁} at ${I}_{ph} = \frac{{V}_{{rst}_{1}} - {V}_{{ref}_{1}}}{{V}_{{rst}_{2}} - {V}_{{ref}_{2}}} {\overline{I}}_{ph}$.

## Claims

1. A pixel operation method comprising two linear photo-integration processes taking place concurrently during an image formation, wherein:
the first linear photo-integration process represents the evolution of the pixel voltage (*Vₚₓ*(*t*)) itself, which decreases linearly from the reset voltage (*Vᵣₛₜ*) according to the local photo-generated current (*Iₚₕ*); and
the second linear photo-integration process represents the evolution of an auxiliary voltage (*Vₐ*(*t*)) that initially decreases linearly from the reset voltage (*Vᵣₛₜ*) according to the average photo-generated current over the whole pixel array (*I̅ₚₕ*);
**characterized in that**
the first and second photo-integration processes are coupled through a reference voltage (*V_{ref}*) common for both first and second photo-integration processes in such a way that whenever the auxiliary voltage (*Vₐ*(*t*)) crosses the reference voltage (*V_{ref}*), the first linear photo-integration process stops, and a final pixel value is established (*V_{px_{F}}*) wherein:
(a) if the auxiliary voltage (*Vₐ*(*t*)) crosses the reference voltage (*V_{ref}*) first, consequently the local photo-generated current is less than the average photo-generated current over the whole pixel array (*Iₚₕ < I̅ₚₕ*) in which the pixel presents a local illumination below the average illumination, and the rate of change of the final pixel value (*V_{px_{F}}*) with respect to the local illumination is constant;
(b) if the pixel voltage (*Vₚₓ*(*t*)) crosses the reference voltage (*V_{ref}*) first, consequently the local photo-generated current is greater than the average photo-generated current over the whole pixel array (*Iₚₕ > I̅ₚₕ*) setting *Vₐ*(*t*) to evolve according to the pixel illumination from an instant (*t_{px_{ref}}*) on; and the pixel presents a local illumination above the average illumination, and the rate of change of the final pixel value (*V_{px_{F}}*) with respect to the local illumination decreases in a quadratic manner with the local illumination.

2. The pixel operation method according to claim 1 wherein when the rate of change of the final pixel value (*V_{px_{F}}*) with respect to the local illumination is constant, the scene information is transferred to the image plane in the same linear manner for all tones below the average illumination.

3. The pixel operation method according to claim 1 or 2, wherein the rate of change of the final pixel value (*V_{px_{F}}*) with respect to the local illumination decreases in a quadratic manner with the local illumination, the illumination values above the average illumination will be progressively compressed into the available signal range until no scene information is transferred to the image plane because of noise or resolution of the readout circuitry.

4. A pixel array circuitry arranged to operate asynchronously once the pixels are reset, requiring no external control according to the pixel operation method of any of claims 1 to 3 comprising a first inverter (INV1) and a second inverter (INV2); an operational amplifier in a buffer configuration; a first photo-diode with area *A*, a second photo-diode with area *A*/*m* and a third photo-diode with area *A*/*n*, being *n* and *m* parameters greater than the unity,
**Characterized in that**
the average illumination voltage (*Vₐᵥ*(*t*)) evolves linearly from a second reset voltage (*V*_{*rst*₂}) according to the average illumination once the reset period is finished, which is a starting point of global-shutter photo-integration leading to image formation;
wherein the sensing of the average illumination is achieved by the interconnection of a node associated to the average illumination voltage (*Vₐᵥ*(*t*)) at every pixel with the corresponding nodes of the neighboring pixels at north, south, east, and west throughout a 2D array, arranged to a lattice in which all the pixels become interconnected;
wherein the photo-currents generated at the photo-diodes with area *A*/*n* are concurrently averaged through charge redistribution at a first capacitor (*C*/*n*) and the operational amplifier in buffer configuration copies the average illumination voltage (*Vₐᵥ*(*t*)) into the auxiliary voltage (*Vₐ*(*t*)) until the pixel voltage (*Vₚₓ*(*t*)) crosses a first threshold voltage (*V*_{*ref*₁}) of the first inverter (INV1), and at this instant, a first switch (SW1) which is controlled by the output of the first inverter (INV1) disconnects the output of the operational amplifier in a buffer configuration from the auxiliary voltage (*Vₐ*(*t*)) which continues evolving from that instant on according to the local photo-current generated by the photo-diode with area *A*/*m*; and
wherein when the auxiliary voltage (*Vₐ*(*t*)) crosses the second threshold voltage (*V*_{*ref*₂}) of the second inverter (INV2), the second switch (SW2) disconnects the first photodiode with area *A* from its sensing capacitor (*C*), setting the final pixel value (*V_{px_{F}}*) voltage.

5. A system for single-shot concurrent auto-exposure (AE) and high-dynamic-range (HDR) imaging **characterized in that** simultaneously realizes AE and HDR during the capture of an image; and wherein for each photo-integration period established to produce the image, a pixel array circuitry according to claim 4 automatically adjusts its response to an average illumination at the moment and fits a radiance map of the scene within an available pixel signal range.
